# EUROPÄISCHE PATENTANMELDUNG

(11) **EP 2 677 043 A1**
(43) Veröffentlichungstag der Anmeldung: **25.12.2013**
(21) Anmeldenummer: 12172875.2
(22) Anmeldetag: 21.06.2012
(51) Int. Cl.: C21B 5/00, C21B 5/06, C21B 13/14

(54) **Verfahren und Vorrichtung zur Herstellung von flüssigem Roheisen oder flüssigem Stahlvorprodukt**

(71) Anmelder: Siemens VAI Metals Technologies GmbH, 4031 Linz (AT)
(72) Erfinder: Hötzinger, Stefan, 4600 Wels (AT); Millner, Robert, 3382 Loosdorf (AT); Rein, Norbert, 1060 Wien (AT); Wieder, Kurt, 4311 Schwertberg (AT); Wurm, Johann, 4283 Bad Zell (AT)
(74) Vertreter: Maier, Daniel Oliver

(57) **Zusammenfassung**

Die Erfindung betrifft ein Verfahren und eine Vorrichtung zur zur Herstellung von flüssigem Roheisen oder flüssigem Stahlvorprodukt (21). Dabei wird Sinter (5) in eine Reduktionszone (6) eines Schmelzreduktionssystems (11) eingebracht und ein im Sinter (5) enthaltenes eisenoxidhältiges Material (33) wird mittels eines Reduktionsgases (19) in der Reduktionszone (6) des Schmelzreduktionssystems (11) reduziert und anschließend und in einer Schmelzzone (26) des Schmelzreduktionssystems (11) zu dem flüssigen Roheisen oder dem flüssigen Stahlvorprodukt (21) aufgeschmolzen. Der Sinter (5) wird mit einer Temperatur von mehr als 300°C, bevorzugt mehr als 500°C, besonders bevorzugt mehr als 600°C in die Reduktionszone (6) des Schmelzreduktionssystems (11) eingebracht.

## Beschreibung

### Technisches Gebiet

Die Erfindung betrifft ein Verfahren und eine Vorrichtung zur Herstellung von flüssigem Roheisen oder flüssigem Stahlvorprodukt, bei dem ein eisenoxidhältiges Material enthaltender Sinter in eine Reduktionszone eines Schmelzreduktionssystems eingebracht wird. Das im Sinter enthaltene eisenoxidhältige Material wird mittels eines Reduktionsgases in der Reduktionszone des Schmelzreduktionssystems reduziert und das reduzierte eisenoxidhältige Material wird anschließend in einer Schmelzzone des Schmelzreduktionssystems zu flüssigem Roheisen oder flüssigem Stahlvorprodukt aufgeschmolzen.

### Stand der Technik

Bei aus dem Stand der Technik bekannten Verfahren zur Herstellung von flüssigem Roheisen oder flüssigem Stahlvorprodukt, wie beispielsweise beim COREX^{®} - Verfahren oder beim Hochofenprozess, wird, bei Einsatz von Sinter, ein in einer Sintervorrichtung hergestellter und eine hohe Temperatur aufweisender Sinterkuchen in einer Brechvorrichtung zu Sinter gebrochen und anschließend abgekühlt. Diese Abkühlung ist im Wesentlichen dadurch begründet, dass nachfolgende mechanische Systeme, insbesondere Fördervorrichtungen zur Förderung des Sinters und Verteilersysteme zum Verteilen des Sinters zu einer COREX^{®} - Anlage oder zu einem Hochofen, nur für begrenzte Temperaturen geeignet sind.

Die Abkühlung des Sinters hat eine Reihe von Nachteilen zur Folge. Ein erster Nachteil ergibt sich dadurch, dass bei der Abkühlung des Sinters Abwärme anfällt, die auf Grund ihrer geringen Temperatur - im Mittel liegt diese Temperatur zwischen 150°C und 250 °C - nur schwierig zu nutzen ist und somit eine Abwärme minderwertiger Qualität darstellt.

Wird der Sinter in diesem abgekühlten Zustand in die Reduktionszone, beispielsweise einer COREX^{®} - Anlage, gefördert, so ist die Wärme eines aus der Reduktionszone abgezogenen Topgases auf Grund seiner geringen Temperatur von etwa 200°C bis 300°C nur schwierig zu nutzen und stellt somit ebenfalls eine Wärme minderwertiger Qualität dar. Ähnliches gilt für den Hochofen, wobei hier die Temperatur des abgezogenen Topgases, beziehungsweise des Gichtgases, nur etwa 100°C bis 200°C beträgt.

Unter Wärme minderwertiger Qualität ist Abwärme beziehungsweise Wärme zu verstehen, deren Temperatur so gering ist, dass bei Nutzung dieser Abwärme beziehungsweise Wärme nur Niederdruckdampf mit beispielsweise weniger als 20 bar hergestellt werden kann, welcher für eine Verstromung nicht geeignet ist.

Nachteilig ist auch, dass im Falle der Nutzung der bei der Abkühlung des Sinters anfallenden Abwärme beziehungsweise der Nutzung der Wärme des aus der Reduktionszone abgezogenen Topgases trotz ihrer minderwertigen Qualität, diese Nutzung an zwei örtlich voneinander verschiedenen Stellen zu erfolgen hat, da die Abkühlung des Sinters und das Abziehen des Topgases aus der Reduktionszone an zwei örtlich voneinander verschiedenen Stellen erfolgt. Diese Nutzung ist daher nur mit einem erhöhten Aufwand an Vorrichtungen zur Nutzung von Wärme, insbesondere Wärmetauschvorrichtungen, möglich.

Durch die Förderung von Sinter im abgekühlten Zustand in die Reduktionszone wird die zur Reduktion des im Sinter enthaltenen eisenoxidhältigen Materials erforderliche Verweilzeit in der Reduktionszone verlängert, da der Sinter beziehungsweise das darin enthaltene eisenoxidhältige Material durch das Reduktionsgas erst auf eine zur Reduktion geeignete Temperatur vorgewärmt werden muss. Außerdem hat dies einen erhöhten Einsatz an Reduktionsgas in der Reduktionszone mit einem damit verbundenen hohen Einsatz an kohlenstoffhältigen Energieträgern in der Schmelzzone zur Folge.

### Zusammenfassung der Erfindung

### Technische Aufgabe

Die Erfindung bezweckt die Vermeidung der beschriebenen Nachteile und Schwierigkeiten und stellt sich die Aufgabe, ein im Vergleich zum Stand der Technik effizienteres Verfahren und eine Vorrichtung zur Herstellung von flüssigem Roheisen oder flüssigem Stahlvorprodukt bereitzustellen.

### Technische Lösung

Diese Aufgabe wird erfindungsgemäß durch ein Verfahren zur Herstellung von flüssigem Roheisen oder flüssigem Stahlvorprodukt, bei dem ein eisenoxidhältiges Material enthaltender Sinter in eine Reduktionszone eines Schmelzreduktionssystems eingebracht wird und das im Sinter enthaltene eisenoxidhältige Material mittels eines Reduktionsgases in der Reduktionszone des Schmelzreduktionssystems zumindest teilweise reduziert und das zumindest teilweise reduzierte eisenoxidhältige Material anschließend in einer Schmelzzone des Schmelzreduktionssystems unter Zugabe eines sauerstoffhältigen Gases und Kohlenstoffträger unter Bildung des Reduktionsgases zu dem flüssigen Roheisen oder zu dem flüssigen Stahlvorprodukt aufgeschmolzen wird, wobei das Schmelzreduktionssystem ein die Reduktionszone enthaltendes Reduktionsaggregat und ein die Schmelzzone enthaltendes Schmelzaggregat umfasst, oder als ein die Reduktionszone und die Schmelzzone enthaltender Hochofen ausgebildet ist, wobei der Sinter mit einer Temperatur von mehr als 300°C, bevorzugt mehr als 500°C, besonders bevorzugt mehr als 600°C in die Reduktionszone des Schmelzreduktionssystems eingebracht wird, gelöst.

Unter eisenoxidhältiges Material enthaltendem Sinter ist ein zusammenagglomeriertes und verschmolzenes eisenoxidhältiges Material umfassendes Mischgut zu verstehen, bei dem der Anteil an eisenoxidhältigem Material im Mischgut den überwiegenden Anteil im Mischgut darstellt.

Das Mischgut besteht aus Komponenten, deren jeweiliger Durchmesser innerhalb eines bestimmten Kornbandes mit einer Korngrößenuntergrenze und einer Korngrößenobergrenze liegen.

Unter eisenoxidhältiges Material ist vorzugsweise Eisenerz umfassendes Material zu verstehen.

Der Sinter wird in die Reduktionszone des Schmelzreduktionssystems eingebracht. Vorzugsweise ist das Schmelzreduktionssystem eine aus dem Stand der Technik bekannte COREX^{®} - Anlage mit einem als Festbettreduktionsaggregat ausgebildeten Reduktionsaggregat und einem dem Reduktionsaggregat zugeordneten, aber von diesem örtlich getrennten, als Einschmelzvergaser ausgebildeten Schmelzaggregat. Das Reduktionsaggregat enthält die Reduktionszone und das Schmelzaggregat enthält die Schmelzzone, wobei diese beiden Zonen ebenfalls örtlich voneinander getrennt, jedoch innerhalb des Schmelzreduktionssystems angeordnet sind. Handelt es sich bei dem Schmelzreduktionssystem um einen Hochofen, so befinden sich sowohl die Reduktionszone als auch die Schmelzzone im Hochofen. Sie grenzen in einem Grenzbereich aneinander, beziehungsweise überlappen sich im Grenzbereich.

Das im Sinter enthaltene eisenoxidhältige Material wird mittels des Reduktionsgases in der Reduktionszone zumindest teilweise reduziert und anschließend in der Schmelzzone zu flüssigem Roheisen oder flüssigem Stahlvorprodukt aufgeschmolzen. Das Reduktionsgas wird während dieses Aufschmelzvorganges in der Schmelzzone durch Vergasung der Kohlenstoffträger gebildet, wonach es in die Reduktionszone eingebracht wird.

Der Sinter wird erfindungsgemäß mit einer Temperatur von mehr als 300°C, bevorzugt mehr als 500°C, besonders bevorzugt mehr als 600°C in die Reduktionszone des Schmelzreduktionssystems eingebracht. Dadurch wird die zur Reduktion des im Sinter enthaltenen eisenoxidhältigen Materials erforderliche Verweilzeit in der Reduktionszone verkürzt, da der Sinter beziehungsweise das darin enthaltene eisenoxidhältige Material durch das Reduktionsgas nicht erst auf eine zur Reduktion geeignete Temperatur vorgewärmt werden muss, sondern der Sinter beziehungsweise das darin enthaltene eisenoxidhältige Material bereits beim Einbringen in die Reduktionszone eine zur Reduktion des eisenoxidhältigen Materials geeignete Temperatur aufweist.

Damit verbunden ist eine im Vergleich zum Stand der Technik geringere Menge an erforderlichem Reduktionsgas in der Reduktionszone, da die erforderliche Menge an Reduktionsgas zum überwiegenden Teil durch die Reduktion und nicht durch die Vorwärmung des im Sinter enthaltenen eisenoxidhältigen Materials bestimmt wird. Die geringere Menge an erforderlichem Reduktionsgas hat einen geringeren Einsatz an Kohlenstoffträgern, durch deren Vergasung in der Schmelzzone das Reduktionsgas gebildet wird, zur Folge.

Zusätzlich wird die zur Reduktion des im Sinter enthaltenen eisenoxidhältigen Materials erforderliche Verweilzeit verkürzt. Durch die verkürzte erforderliche Verweilzeit ergibt sich der Vorteil einer Leistungssteigerung bei einer gegebenen Anlagengröße des Schmelzreduktionssystems. Damit verbunden ist eine Steigerung der Masse des hergestellten flüssigen Roheisens beziehungsweise des flüssigen Stahlvorprodukts bezogen auf die Masse der eingesetzten Kohlenstoffträger.

Bei einer besonders bevorzugten Ausführungsform des erfindungsgemäßen Verfahrens wird das bei der Reduktion verbrauchte Reduktionsgas als Topgas mit einer Temperatur von mehr als 300°C, vorzugsweise von mehr als 500°C, besonders bevorzugt von mehr als 600°C vom Schmelzreduktionssystem abgezogen und die Temperatur des Topgases durch Nutzung zumindest einer Teilmenge der im Topgas enthaltenen Wärmeenergie durch Übertragung auf einen Wärmeträger, auf weniger als 300°C, vorzugsweise auf weniger als 250°C, besonders bevorzugt auf weniger als 200°C abgesenkt.

Durch die hohe Temperatur des aus dem Schmelzreduktionssystem abgezogenen Topgases von mehr als 300°C, vorzugsweise von mehr als 500°C, besonders bevorzugt von mehr als 600°C, kann die im Topgas enthaltene Wärmeenergie effektiv und sinnvoll durch Übertragung auf einen Wärmeträger genutzt werden, da es sich auf Grund der hohen Temperatur des Topgases bei der im Topgas enthaltenen Wärmeenergie um Wärmeenergie hochwertiger Qualität handelt, die bestens für eine Nutzung für eine Verstromung beziehungsweise zur Erzeugung von Hochdruckdampf mit beispielsweise mehr als 20 bar geeignet ist. Die auf den Wärmeträger übertragene Wärmeenergie des Topgases wird vorzugsweise in einem Dampfkraftwerk und/oder in einem Dampfturbinen-Generatorsatz genutzt. Erfolgt die Nutzung der Wärmeenergie in einem Dampfkraftwerk, so handelt es sich vorzugsweise um eine Dampferzeugung für eine thermische Nutzung. Nach Nutzung der im Topgas enthaltenen Wärmeenergie beträgt die Temperatur des Topgases weniger als 300°C, vorzugsweise weniger als 250°C, besonders bevorzugt weniger als 200°C.

Bei einer weiteren bevorzugten Ausführungsform des erfindungsgemäßen Verfahrens wird die im Topgas enthaltene Druckenergie, nach Nutzung der Wärmeenergie des Topgases und nach einer Entstaubung des Topgases, zumindest zum Teil, vorzugsweise in einer Entspannungsturbine, genutzt.

Die Entstaubung des Topgases erfolgt in einer Entstaubungsvorrichtung mittels einer Trockenentstaubung oder einer Nassentstaubung. Auch eine Kombination aus Trockenentstaubung und Nassentstaubung, wie beispielsweise eine Trockenentstaubung mit nachfolgender Nassentstaubung, ist möglich.

Nach der Nutzung der im Topgas enthaltenen Wärmeenergie beträgt dessen Temperatur weniger als 300°C, vorzugsweise weniger als 250°C, besonders bevorzugt weniger als 200°C. Dadurch besteht die Möglichkeit, das Topgas einer Trockenentstaubung zu unterziehen.

Die Druckenergie des Topgases wird vorzugsweise in einer Entspannungsturbine genutzt. Im Gegensatz zu einer Nassentstaubung hat die Trockenentstaubung den Vorteil, dass die Temperatur des Topgases bei der Trockenentstaubung nicht in dem Ausmaß abgesenkt wird, als dies bei der Nassentstaubung der Fall wäre. Dadurch wird das Topgas mit einem höheren Druck beziehungsweise mit einer höheren Temperatur in die Entspannungsturbine eingebracht, wodurch die im Topgas enthaltene Druckenergie effektiver genutzt werden kann. Damit ist eine Erhöhung der in der Entspannungsturbine erzeugten Energie verbunden.

Gegebenenfalls wird eine nassbetriebene Entspannungsturbine verwendet. Dabei wird nach der Entstaubung des Topgases und vor der Nutzung der Druckenergie in der Entspannungsturbine ein Lösungsmittel in das Topgas eingedüst. Vorzugsweise erfolgt diese Eindüsung periodisch. Damit werden Anpackungen von mit dem Topgas mitbeförderten Feststoffpartikeln und Tröpfchen an Teilen der Entspannungsturbine verhindert.

Eine bevorzugte Ausführungsform des erfindungsgemäßen Verfahrens zeichnet sich dadurch aus, dass dem vom Schmelzreduktionssystem abgezogenen Topgas in einer Kühlvorrichtung, vor der Nutzung dessen Wärmeenergie, Wasser und/oder Dampf zur Kühlung des abgezogenen Topgases zugesetzt wird.

Das Zusetzen von Wasser zum abgezogenen Topgas in der Kühlvorrichtung erfolgt vorzugsweise durch Wassereinspritzung. Dadurch kann die Temperatur des aus dem Schmelzreduktionssystem abgezogenen Topgases abgesenkt werden. Dadurch kann im Fall von Betriebsstörungen, beispielsweise wenn die Wärmeenergie und/oder die Druckenergie des abgezogenen Topgases aus anlagentechnischen Gründen zeitweise nicht genutzt werden kann/können, durch das Zusetzen von Wasser und/oder Dampf die Temperatur des abgezogenen Topgases abgesenkt werden. Damit wird die Gefahr einer Beschädigung nachfolgender Vorrichtungen, insbesondere nachfolgender Trockenentstaubungssvorrichtungen, minimiert. Diese bevorzugte Ausführungsform des erfindungsgemäßen Verfahrens wirkt daher als Notfallkühlsystem.

In einer Variante des erfindungsgemäßen Verfahrens wird eine Teilmenge des Topgases unter Umgehung der Nutzung der in ihm enthaltenen Wärmeenergie der Entstaubung in der Entstaubungsvorrichtung zugeführt.

Damit kann bei niedriger Topgastemperatur und/oder bei geringer Topgasmenge verhindert werden, dass die Temperatur des Topgases beispielsweise für die nachfolgende Trockenentstaubung beziehungsweise für die Nutzung seiner Druckenergie in der Entspannungsturbine zu niedrig ist.

Bei einer weiteren Ausführungsform des erfindungsgemäßen Verfahrens wird zumindest eine Teilmenge des Topgases vor der Nutzung seiner Wärmeenergie einer Grobentstaubung unterzogen.

Bei der Grobentstaubung erfolgt eine Abscheidung der in dem aus dem Schmelzreduktionssystem abgezogenen Topgas enthaltenen Feststoffpartikel. Vorzugsweise handelt es sich bei der Grobentstaubung um eine trockene Staubvorabscheidung zur Abscheidung von groben Feststoffpartikeln aus dem abgezogenen Topgas. Dadurch wird die Gefahr von Beschädigungen nachfolgender Vorrichtungen, wie beispielsweise eine Wärmetauschvorrichtung, minimiert. Vorzugsweise erfolgt die Grobentstaubung nach der Kühlung des abgezogenen Topgases in der Kühlvorrichtung.

Eine Ausführungsform des erfindungsgemäßen Verfahrens ist dadurch gekennzeichnet, dass der Sinter mittels einer Chargiervorrichtung und einer nachgeordneten Verteilervorrichtung in die Reduktionszone des Schmelzreduktionssystems eingebracht wird, wobei das Einbringen des Sinters in Mischung mit Zusatzstoffen oder als Lagenchargierung mit den Zusatzstoffen erfolgt.

Vorzugsweise ist die Chargiervorrichtung ein hot lock hopper System. Unter Zusatzstoffe sind beispielsweise Kalkstein, Pellets, Additive oder Kohlenstoffträger zu verstehen. Die Zusatzstoffe können auch eine Kombination der genannten Stoffe umfassen.

Die Chargiervorrichtung und die Verteilervorrichtung sind geeignet, den Sinter mit den Zusatzstoffen mit einer Temperatur von mehr als 300°C, bevorzugt mehr als 500°C, besonders bevorzugt mehr als 600°C in die Reduktionszone des Schmelzreduktionssystems einzubringen.

Der Sinter und die Zusatzstoffe werden von der Chargiervorrichtung in die Verteilervorrichtung gefördert. In der Verteilervorrichtung erfolgt das Einbringen des Sinters mit den Zusatzstoffen entweder in Mischung mit den Zusatzstoffen oder als Lagenchargierung mit den Zusatzstoffen. Bei der Lagenchargierung werden der Sinter und beispielsweise die Kohlenstoffträger derart in die Reduktionszone des Schmelzreduktionssystems eingebracht, dass der Sinter und die Kohlenstoffträger in der Reduktionszone jeweils unterschiedliche Lagen aufweisen.

Bei einer weiteren Ausführungsform des erfindungsgemäßen Verfahrens wird der Sinter mittels einer Fördervorrichtung in die Chargiervorrichtung eingebracht.

Die Fördervorrichtung ist vorzugsweise eine Heißfördervorrichtung, wobei der geförderte Sinter während der Förderung mittels der Fördervorrichtung vorzugsweise von einem inerten Gas umgeben ist. Die Zusatzstoffe werden ebenfalls mittels der Fördervorrichtung in die Chargiervorrichtung eingebracht. In diesem Zusammenhang wird unter dem inerten Gas ein Gas verstanden, das die Gefahr einer Entzündung des mittels der Fördervorrichtung geförderten Sinters und der Zusatzstoffe verhindert beziehungsweise minimiert. Weiter wird durch das inerte Gas eine Reoxidation des im Sinter enthaltenen eisenoxidhältigen Materials verhindert. Als inerte Gase kommen insbesondere Stickstoff und/oder ein Gas oder Gasgemische mit geringem Oxidationspotential, beispielsweise Kohlendioxid, in Frage.

Der Sinter ist vorzugsweise auch während des Einbringens in die Chargiervorrichtung von dem inerten Gas umgeben.

Eine Ausführungsform des erfindungsgemäßen Verfahrens zeichnet sich dadurch aus, dass die Temperatur des mittels der Fördervorrichtung geförderten Sinters mehr als 300°C, bevorzugt mehr als 500°C, besonders bevorzugt mehr als 600°C, beträgt.

Dadurch kann der Sinter auch nahezu mit dieser Temperatur von der Fördervorrichtung in die Chargiervorrichtung beziehungsweise in die Verteilervorrichtung eingebracht und damit auch in diesem heißen Zustand von der Chargiervorrichtung beziehungsweise von der Verteilervorrichtung in die Reduktionszone des Schmelzreduktionssystems eingebracht werden.

Eine weitere Ausführungsform des erfindungsgemäßen Verfahrens ist dadurch gekennzeichnet, dass eisenoxidhältiges Material mittels einer Sintervorrichtung zu einem Sinterkuchen verarbeitet wird und der Sinterkuchen anschließend in zumindest einer Brechvorrichtung zu Sinter gebrochen wird, wobei der gebrochene Sinter nach Klassifizierung in einer Klassifizierungsvorrichtung auf die Fördervorrichtung aufgegeben wird.

Vorzugsweise werden dem eisenoxidhältigen Material vor dessen Verarbeitung zu dem Sinterkuchen Zuschlagskomponenten wie beispielsweise Kalkstein zugesetzt. Dies dient zur Einstellung der für nachfolgende Prozesse erforderlichen Zusammensetzung des Sinters.

Gegebenenfalls wird das eisenoxidhältige Material vor dessen Verarbeitung zu Sinterkuchen in der Sintervorrichtung einer Vorsiebung unterzogen. In der Sintervorrichtung erfolgt die Verarbeitung des eisenoxidhältigen Materials und der Zuschlagskomponenten zu einem Sinterkuchen. Diese Verarbeitung erfolgt derart, dass das eisenoxidhältige Material und die Zuschlagskomponenten von Umgebungsluft, unter Bildung des Sinterkuchens, durchströmt werden. Der Sinterkuchen wird anschließend zu Sinter mit einer Korngröße von maximal 50mm gebrochen, wobei in der nachfolgenden Klassifizierungsvorrichtung die Korngröße unter Abscheidung eines Unterkorns auf einen Bereich zwischen 5mm und 50mm eingestellt wird.

Vorzugsweise erfolgt das Brechen des Sinterkuchens mittels zweier aufeinanderfolgender Brechvorgänge, wobei die Korngröße des Sinters mittels eines ersten Brechvorganges auf maximal 200mm, sogenannter grober Sinter, und mittels eines zweiten Brechvorganges auf maximal 50mm, sogenannter feiner Sinter, eingestellt wird. Anschließend erfolgt in der Klassifizierungsvorrichtung die Einstellung der Korngröße auf einen Bereich zwischen 5mm und 50mm. Das in der Klassifizierungsvorrichtung abgeschiedene Unterkorn mit einer Korngröße von maximal 5mm wird in die Sintervorrichtung rückgeführt und dem eisenoxidhältigen Material beziehungsweise den Zuschlagskomponenten vor deren Verarbeitung zum Sinterkuchen zugesetzt.

Bei einer bevorzugten Ausführungsform des erfindungsgemäßen Verfahrens wird der Sinter mit einer Temperatur von mehr als 300°C, bevorzugt mehr als 500°C, besonders bevorzugt mehr als 600°C auf die Fördervorrichtung aufgegeben.

Die Durchströmung des eisenoxidhältigen Materials und der Zuschlagskomponenten mit der Umgebungsluft unter Bildung des Sinterkuchens bewirkt, dass die Temperatur des in der Klassifizierungsvorrichtung klassifizierten Sinters mehr als 300°C, bevorzugt mehr als 500°C, besonders bevorzugt mehr als 600°C beträgt. Mit dieser Temperatur wird der Sinter auf die Fördervorrichtung aufgegeben. Von der Verarbeitung des eisenoxidhältigen Materials und der Zuschlagskomponenten zu dem Sinterkuchen mittels der Sintervorrichtung bis zum Einbringen des Sinters in die Reduktionszone des Schmelzreduktionssystems mittels der Chargiervorrichtung beziehungsweise der Verteilervorrichtung beträgt der Temperaturverlust des Sinters vorzugsweise nicht mehr als 100°C. Dadurch werden die erfindungsgemäßen Vorteile gegenüber dem Stand der Technik sichergestellt.

Ein weiterer Gegenstand der vorliegenden Erfindung ist eine Vorrichtung zur Durchführung des erfindungsgemäßen Verfahrens umfassend ein eine Reduktionszone und eine Schmelzzone enthaltendes Schmelzreduktionssystem mit einer Topgasleitung zum Abziehen von Topgas aus dem Schmelzreduktionssystem, eine Fördervorrichtung zur Förderung von Sinter in eine dem Schmelzreduktionssystem zugeordnete Chargiervorrichtung und eine Verteilervorrichtung, wobei das Schmelzreduktionssystem ein die Reduktionszone enthaltendes Reduktionsaggregat und ein die Schmelzzone enthaltendes Schmelzaggregat umfasst, oder als Hochofen ausgebildet ist, und die Fördervorrichtung eine Heißfördervorrichtung, die Chargiervorrichtung eine Heißchargiervorrichtung und die Verteilervorrichtung eine Heißverteilervorrichtung ist.

Das Schmelzreduktionssystem ist vorzugsweise eine COREX^{®} -Anlage oder ein Hochofen.

Der Sinter wird mittels der Fördervorrichtung in die Chargiervorrichtung gefördert. Die Chargiervorrichtung und die Verteilervorrichtung sind dem Schmelzreduktionssystem zugeordnet, wobei die Chargiervorrichtung und die Verteilervorrichtung dabei derart angeordnet sind, dass der zur Chargiervorrichtung geförderte Sinter mittels der Verteilervorrichtung in die Reduktionszone des Schmelzreduktionssystems eingebracht werden kann.

Die Fördervorrichtung ist eine Heißfördervorrichtung, welche geeignet ist, den Sinter mit einer Temperatur von mehr als 300°C, bevorzugt mehr als 500°C, besonders bevorzugt mehr als 600°C zu fördern. Die Chargiervorrichtung und die Verteilervorrichtung sind derart ausgebildet, dass sie den eisenoxidhältiges Material enthaltenden Sinter, mit einer Temperatur von mehr als 300°C, bevorzugt mehr als 500°C, besonders bevorzugt mehr als 600°C in die Reduktionszone des Schmelzreduktionssystems einbringen können. Auch die Zusatzstoffe können mit diesen Vorrichtungen in die Reduktionszone eingebracht werden.

Die erfindungsgemäße Vorrichtung ist geeignet, sowohl den Sinter mit einer Temperatur von mehr als 300°C, bevorzugt mehr als 500°C, besonders bevorzugt mehr als 600°C in die Reduktionszone des Schmelzreduktionssystems einzubringen als auch den Sinter mit einer Temperatur von mehr als 300°C, bevorzugt mehr als 500°C, besonders bevorzugt mehr als 600°C mittels der Fördervorrichtung zu fördern, wodurch die Vorteile des erfindungsgemäßen Verfahrens sichergestellt werden.

Bei einer Ausführungsform der erfindungsgemäßen Vorrichtung ist in der Topgasleitung eine Wärmetauschvorrichtung zum Entziehen von Wärmeenergie aus dem Topgas angeordnet.

Mittels der Wärmetauschvorrichtung wird dem Topgas die Wärmeenergie durch Übertragung auf einen Wärmeträger entzogen. Der Wärmeträger kann ein Gas oder eine Flüssigkeit sein. Nach Übertragung der Wärmeenergie des Topgases auf den Wärmeträger wird die Wärmeenergie des Wärmeträgers beispielsweise in einem Dampfkraftwerk und/oder in einem Dampfturbinen Generatorsatz genutzt.

Eine weitere Ausführungsform der erfindungsgemäßen Vorrichtung ist dadurch gekennzeichnet, dass in der Topgasleitung und nach der Wärmetauschvorrichtung nacheinander eine Entstaubungsvorrichtung zur Entstaubung des Topgases und eine Entspannungsturbine angeordnet sind.

Die Entstaubungsvorrichtung kann eine Trockenentstaubungsvorrichtung oder eine Nassentstaubungsvorrichtung sein. Die Entstaubungsvorrichtung kann auch eine Kombination aus der Trockenentstaubungsvorrichtung und der Nassentstaubungsvorrichtung, beispielsweise eine Trockenentstaubungsvorrichtung mit einer nachfolgenden Nassentstaubungsvorrichtung sein.

Eine weitere Ausführungsform der erfindungsgemäßen Vorrichtung zeichnet sich dadurch aus, dass in der Topgasleitung, zwischen dem Schmelzreduktionssystem und der Wärmetauschvorrichtung eine Kühlvorrichtung zur Kühlung des Topgases vorhanden ist.

Das aus dem Schmelzreduktionssystem abgezogene Topgas wird in die Kühlvorrichtung eingebracht. In der Kühlvorrichtung erfolgt eine Kühlung des Topgases mittels Wasser und/oder Dampf. Dazu wird vorzugsweise Wasser und/oder Dampf in die Topgasleitung eingespritzt.

Eine Ausführungsform der erfindungsgemäßen Vorrichtung kennzeichnet sich dadurch, dass eine die Wärmetauschvorrichtung umgehende Bypassleitung, welche vor der Wärmetauschvorrichtung aus der Topgasleitung entspringt und nach der Wärmetauschvorrichtung wieder in die Topgasleitung mündet, vorhanden ist.

Über die Bypassleitung kann eine Teilmenge des Topgases an der Wärmetauschvorrichtung vorbeigeleitet werden. Damit wird das oben genannte Notfallkühlsystem realisiert.

Eine weitere Ausführungsform der erfindungsgemäßen Vorrichtung ist dadurch gekennzeichnet, dass der Fördervorrichtung eine Sintervorrichtung mit zumindest einer zugeordneten Brechvorrichtung und eine Klassifizierungsvorrichtung vorgeschaltet sind, wobei die Klassifizierungsvorrichtung mit der Fördervorrichtung derart verbunden ist, dass der in der Klassifizierungsvorrichtung klassifizierte Sinter auf die Fördervorrichtung aufgebbar ist.

Vorzugsweise ist die Fördervorrichtung mit der Klassifizierungsvorrichtung derart verbunden, dass der klassifizierte Sinter, von einem inerten Gas umgeben, auf die Fördervorrichtung aufgebbar ist. Die Brechvorrichtung beziehungsweise Brechvorrichtungen ist/sind beispielsweise als Mahlvorrichtung ausgebildet. Sind zwei Brechvorrichtungen vorhanden, so wird der aus der Sintervorrichtung stammende Sinterkuchen in der ersten Brechvorrichtung zu dem groben Sinter und nachfolgend in der zweiten Brechvorrichtung zu dem feinem Sinter gebrochen. In der Klassifizierungsvorrichtung erfolgt anschließend die Klassifizierung des feinen Sinters zu dem Sinter, welcher mittels der Fördervorrichtung in die Chargiervorrichtung eingebracht wird. Vorzugsweise ist die Klassifizierungsvorrichtung ein Sieb.

Eine Ausführungsform der erfindungsgemäßen Vorrichtung ist dadurch gekennzeichnet, dass in der Topgasleitung, zwischen der Wärmetauschvorrichtung und der Kühlvorrichtung, eine Grobentstaubungsvorrichtung zur Grobentstaubung des aus dem Schmelzreduktionssystem abgezogenen Topgases angeordnet ist.

Vorzugsweise handelt es sich bei der Grobentstaubungsvorrichtung um eine Grobentstaubungsvorrichtung mit trockener Staubvorabscheidung zur Abscheidung der groben Feststoffpartikel aus dem abgezogenen Topgas. Dadurch wird die Gefahr von Beschädigungen nachfolgender Vorrichtungen durch die groben Feststoffpartikel minimiert beziehungsweise verhindert.

### Kurze Beschreibung der Zeichnungen

Die Erfindung wird nachfolgend anhand von Ausführungsformen in beispielhafter Weise erläutert.
FIG 1 zeigt beispielhaft und schematisch ein erfindungsgemäßes Verfahren und eine erfindungsgemäße Vorrichtung mit einer COREX^{®} - Anlage als Schmelzreduktionssystem.
FIG 2 zeigt beispielhaft und schematisch einen Ausschnitt eines erfindungsgemäßen Verfahrens und einer erfindungsgemäßen Vorrichtung mit einem Hochofen als Schmelzreduktionssystem.

### Beschreibung der Ausführungsformen

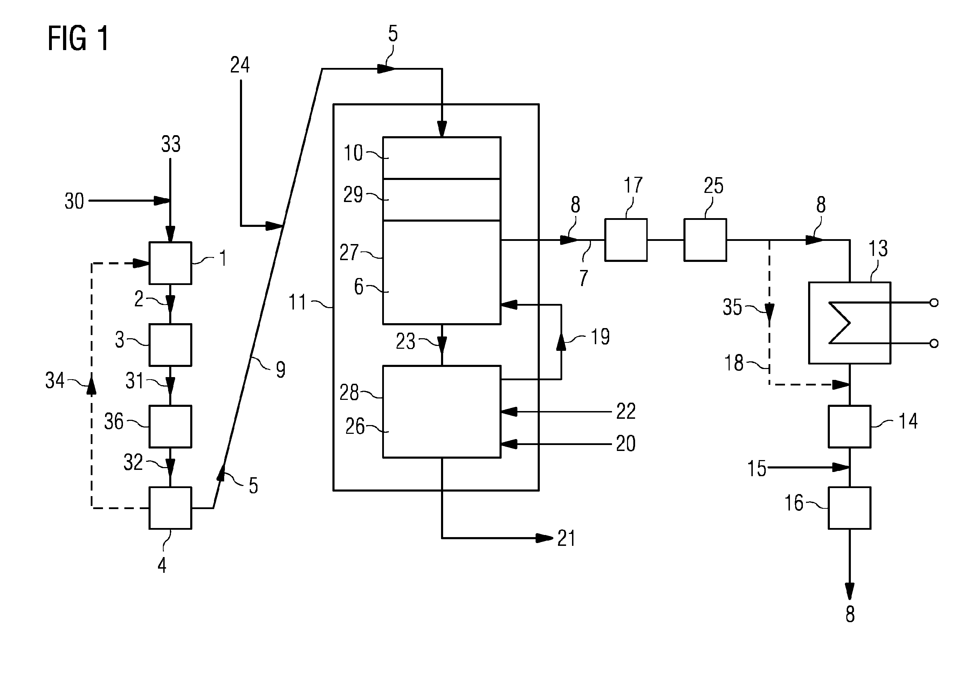

FIG 1 zeigt beispielhaft und schematisch das erfindungsgemäße Verfahren und die erfindungsgemäße Vorrichtung zur Herstellung von flüssigem Roheisen oder flüssigem Stahlvorprodukt (21), bei dem eisenoxidhältiges Material (33) in einer Sintervorrichtung (1) zu einem Sinterkuchen (2) verarbeitet wird. Dem eisenoxidhältigen Material (33) werden Zuschlagskomponenten (30) wie beispielsweise Kalkstein zugegeben. Gegebenenfalls wird das eisenoxidhältige Material (33) vor dessen Verarbeitung zu Sinterkuchen (2) in einer in FIG 1 nicht dargestellten Vorrichtung einer Vorsiebung unterzogen. Diese Verarbeitung erfolgt derart, dass das eisenoxidhältige Material (33) in der Sintervorrichtung (1) von Umgebungsluft unter Bildung des Sinterkuchens (2) durchströmt wird. Der Sinterkuchen (2) wird anschließend mittels eines ersten Brechvorganges in einer ersten Brechvorrichtung (3) zu einem groben Sinter (31) mit einer Korngröße des groben Sinters (31) von maximal 200mm gebrochen. In einer nachfolgenden zweiten Brechvorrichtung (36) wird der grobe Sinter (31) zu feinem Sinter (32) mit einer Korngröße des feinen Sinters (32) von maximal 50mm gebrochen. In einer Klassifizierungsvorrichtung (4) erfolgt eine Einstellung der Korngröße des feinen Sinters (32) auf einen Bereich zwischen 5mm und 50mm unter Erhalt des

Sinters (5), welcher auf eine Fördervorrichtung (9) aufgegeben wird. Ein in der Klassifizierungsvorrichtung (4) abgeschiedenes Unterkorn (34) mit einer Korngröße von maximal 5mm wird gegebenenfalls in die Sintervorrichtung (1) rückgeführt. Der Sinter (5) wird vorzugsweise mit einer Temperatur von mehr als 300°C, bevorzugt mehr als 500°C, besonders bevorzugt mehr als 600°C auf die Fördervorrichtung (9) aufgegeben. Das Aufgeben des Sinters (5) auf die Fördervorrichtung (9) erfolgt vorzugsweise in einer inerten Gasatmosphäre unter einem inerten Gas wie beispielsweise Stickstoff oder Kohlendioxid. Der Sinter (5) wird mittels der Fördervorrichtung (9) in eine Chargiervorrichtung (10) und von dort in eine Verteilervorrichtung (29) eingebracht.

Dem Sinter (5) können vor, während oder nach seiner Förderung mittels der Fördervorrichtung (9) Zusatzstoffe (24) zugesetzt werden, wobei in FIG 1 das Zusetzen der Zusatzstoffe (24) während der Förderung dargestellt ist. Vorzugsweise erfolgt die Förderung des Sinters (5) und der Zusatzstoffe (24) mittels der Fördervorrichtung (9) in einer inerten Gasatmosphäre unter einem inerten Gas wie beispielsweise Stickstoff oder Kohlendioxid. Die Temperatur des mittels der Fördervorrichtung (9) geförderten Sinters (5) und der Zusatzstoffe (24) beträgt mehr als 300°C, bevorzugt mehr als 500°C, besonders bevorzugt mehr als 600°C. Der Sinter (5) und die Zusatzstoffe (24) werden mittels der Fördervorrichtung (9) in die Chargiervorrichtung (10) eingebracht. Der Sinter (5) und die Zusatzstoffe (24) werden anschließend von der Chargiervorrichtung (10) in die Verteilervorrichtung (29) gefördert. Mittels der Verteilervorrichtung (29) erfolgt das Einbringen des Sinters (5) mit den Zusatzstoffen (24) in eine Reduktionszone (6) eines Schmelzreduktionssystems (11), beispielsweise in Mischung mit den Zusatzstoffen (24).

Das Schmelzreduktionssystem (11) ist eine COREX^{®} - Anlage, bei der das im Sinter (5) enthaltene eisenoxidhältige Material (33) in der Reduktionszone (6) des Schmelzreduktionssystems (11) mittels eines Reduktionsgases (19) zumindest teilweise reduziert wird und das zumindest teilweise reduzierte eisenoxidhältige Material (23) anschließend in eine Schmelzzone (26) des Schmelzreduktionssystems (11) eingebracht wird.

In der Schmelzzone (26) erfolgt unter Zugabe eines sauerstoffhältigen Gases (20) und Kohlenstoffträger (22) das Aufschmelzen des zumindest teilweise reduzierten eisenoxidhältigen Materials (23) zu flüssigem Roheisen oder flüssigem Stahlvorprodukt (21), wobei das Reduktionsgas (19) während dieses Aufschmelzvorganges in der Schmelzzone (26) durch Vergasung der Kohlenstoffträger (22) gebildet wird. Die COREX^{®} - Anlage umfasst ein als Festbettreduktionsaggregat ausgebildetes Reduktionsaggregat (27) und ein dem Reduktionsaggregat (27) zugeordnetes, als Einschmelzvergaser ausgebildetes Schmelzaggregat (28). Das Reduktionsaggregat (27) enthält die Reduktionszone (6) und das Schmelzaggregat (28) enthält die Schmelzzone (26), wobei diese beiden Zonen örtlich voneinander getrennt, jedoch innerhalb des Schmelzreduktionssystems (11) angeordnet sind.

Das bei der Reduktion des im Sinter (5) enthaltenen eisenoxidhältigen Materials (33) zu dem zumindest teilweise reduzierten eisenoxidhältigen Material (23) in der Reduktionszone (6) verbrauchte Reduktionsgas (19) wird über die Topgasleitung (7) als Topgas (8) mit einer Temperatur von mehr als 300°C, vorzugsweise von mehr als 500°C, besonders bevorzugt von mehr als 600°C vom Schmelzreduktionssystem (11) beziehungsweise von der Reduktionszone (6) des Schmelzreduktionssystems (11) abgezogen und einer Kühlvorrichtung (17) zugeführt, in der das abgezogene Topgas (8) durch Zusetzen von Wasser und/oder Dampf zum abgezogenen Topgas (8) gekühlt wird. Das Zusetzen von Wasser zum abgezogenen Topgas (8) in der Kühlvorrichtung (17) erfolgt durch Wassereinspritzung. Dadurch kann die Temperatur des aus dem Schmelzreduktionssystem (11) abgezogenen Topgases (8) abgesenkt werden. Anschließend wird das Topgas einer Grobentstaubungsvorrichtung (25) zugeführt.

Bei der Grobentstaubung in der Grobentstaubungsvorrichtung (25) erfolgt eine zumindest teilweise Abscheidung von mit dem Topgas (8) mitbeförderten Feststoffpartikeln. Vorzugsweise handelt es sich bei der Grobentstaubung um eine trockene Staubvorabscheidung zur Abscheidung von groben Feststoffpapartikeln aus dem abgezogenen Topgas (8).

In einer nachfolgenden, in der Topgasleitung (7) angeordneten Wärmetauschvorrichtung (13), wird die Temperatur des Topgases (8) durch Nutzung zumindest einer Teilmenge der im Topgas (8) enthaltenen Wärmeenergie durch Übertragung auf einen Wärmeträger auf weniger als 300°C, vorzugsweise auf weniger als 250°C, besonders bevorzugt auf weniger als 200°C abgesenkt. Nach Nutzung der Wärmeenergie des Topgases (8) wird das Topgas (8) einer Entstaubungsvorrichtung (14) zugeführt. Anschließend wird das entstaubte Topgas (8) in eine Entspannungsturbine (16) eingebracht, wobei eine in dem entstaubten Topgas (8) enthaltene Druckenergie zumindest zum Teil genutzt wird. Damit verbunden ist auch eine Nutzung der im entstaubten Topgas (8) enthaltenen Wärmeenergie. Die Entstaubungsvorrichtung (14) kann eine Trockenentstaubungsvorrichtung oder eine Nassentstaubungsvorrichtung sein.

Bei Verwendung einer nassbetriebenen Entspannungsturbine (16) wird nach der Entstaubung des Topgases (8) in der Entstaubungsvorrichtung (14) und vor der Nutzung der Druckenergie des Topgases (8) in der Entspannungsturbine (16) ein Lösungsmittel (15) in das Topgas (8) eingedüst. Vorzugsweise erfolgt diese Eindüsung periodisch.

Optional wird mittels einer Bypassleitung (18) zumindest eine Teilmenge des gekühlten Topgases (8) als Bypassgasstrom (35) abgezweigt. Über die Bypassleitung (18) wird der Bypassgasstrom (35), unter Umgehung der Nutzung der in ihm enthaltenen Wärmeenergie in der Wärmetauschvorrichtung (13) der Entstaubungsvorrichtung (14) zugeführt.

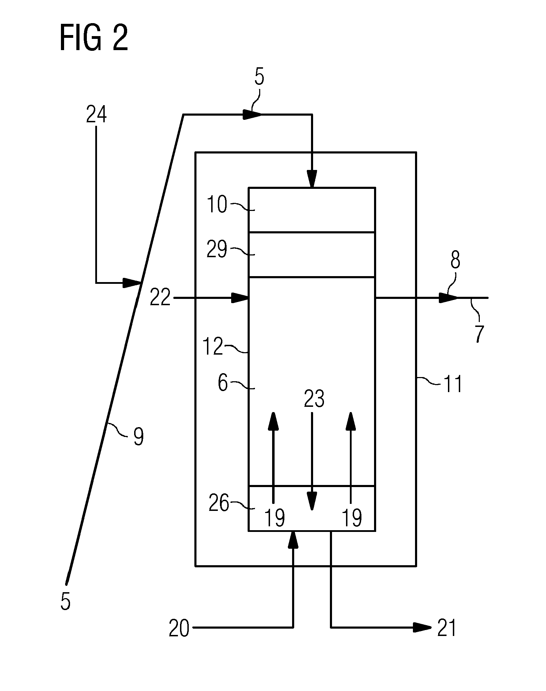

FIG 2 zeigt beispielhaft und schematisch einen Ausschnitt des erfindungsgemäßen Verfahrens und der erfindungsgemäßen Vorrichtung mit einem als Hochofen (12) ausgebildeten Schmelzreduktionssystem (11).

Alle in FIG 1 außerhalb des Schmelzreduktionssystems (11) dargestellten und beschriebenen Merkmale der Erfindung, sind sinngemäß auch auf die Darstellung und Beschreibung der FIG 2 anzuwenden. Die Förderung des Sinters (5) erfolgt mittels der Fördervorrichtung (9), vorzugsweise in einer inerten Gasatmosphäre unter einem inerten Gas. Die Temperatur des mittels der Fördervorrichtung (9) geförderten Sinters (5) beträgt mehr als 300°C, bevorzugt mehr als 500°C, besonders bevorzugt mehr als 600°C.

Dabei wird der Sinter (5), gegebenenfalls mit den Zusatzstoffen (24) wie Pellets und/oder Additiven und/oder Kohlenstoffträger, mittels der Chargiervorrichtung (10) und der Verteilervorrichtung (29) in die Reduktionszone (6) des Schmelzreduktionssystems (11), welches als Hochofen (12) ausgebildet ist, eingebracht, wobei das Einbringen des Sinters (5) beispielsweise in Mischung mit den Zusatzstoffen (24) erfolgt. Das Schmelzreduktionssystem (11) ist als Hochofen (12) ausgebildet, bei dem das im Sinter (5) enthaltene eisenoxidhältige Material in der Reduktionszone (6) mittels eines Reduktionsgases (19) zumindest teilweise reduziert wird und das zumindest teilweise reduzierte eisenoxidhältige Material (23) anschließend in der Schmelzzone (26) des Schmelzreduktionssystems (11) gelangt. In einem unteren Bereich der Schmelzzone (26) erfolgt unter Zugabe eines sauerstoffhältigen Gases (20), beispielsweise heiße Luft, und Kohlenstoffträger (22) das Aufschmelzen des zumindest teilweise reduzierten eisenoxidhältigen Materials (23) zu flüssigem Roheisen oder flüssigem Stahlvorprodukt (21), wobei das Reduktionsgas (19) während dieses Aufschmelzvorganges hauptsächlich im unteren Bereich der Schmelzzone (26) durch Vergasung der Kohlenstoffträger (22) gebildet wird. Der Hochofen (12) umfasst eine als Festbett ausgeführte Reduktionszone (6) und eine unter der Reduktionszone (6) angeordnete Schmelzzone (26). Die Reduktionszone (6) und die Schmelzzone (26) grenzen in einem in FIG 2 als gerade Linie zwischen der Reduktionszone (6) und der Schmelzzone (26) dargestellten Grenzbereich aneinander. Das bei der Reduktion des eisenoxidhältigen Materials in der Reduktionszone (6) verbrauchte Reduktionsgas (19) wird über die Topgasleitung (7) als Topgas (8) mit einer Temperatur von mehr als 300°C, vorzugsweise von mehr als 500°C, besonders bevorzugt von mehr als 600°C vom Schmelzreduktionssystem (11) beziehungsweise vom Hochofen (12) abgezogen. Das abgezogene Topgas (8) wird in diesem Fall - da das Schmelzreduktionssystem (11) als Hochofen (12) ausgebildet ist - auch als Gichtgas bezeichnet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Sintervorrichtung
- 2: Sinterkuchen
- 3: erste Brechvorrichtung
- 4: Klassifizierungsvorrichtung
- 5: Sinter
- 6: Reduktionszone
- 7: Topgasleitung
- 8: Topgas
- 9: Fördervorrichtung
- 10: Chargiervorrichtung
- 11: Schmelzreduktionssystem
- 12: Hochofen (12)
- 13: Wärmetauschvorrichtung
- 14: Entstaubungsvorrichtung
- 15: Lösungsmittel
- 16: Entspannungsturbine
- 17: Kühlvorrichtung
- 18: Bypassleitung
- 19: Reduktionsgas
- 20: sauerstoffhältiges Gas
- 21: flüssiges Roheisen oder flüssiges Stahlvorprodukt
- 22: Kohlenstoffträger
- 23: zumindest teilweise reduziertes eisenoxidhältiges Material
- 24: Zusatzstoffe
- 25: Grobentstaubungsvorrichtung
- 26: Schmelzzone
- 27: Reduktionsaggregat
- 28: Schmelzaggregat
- 29: Verteilervorrichtung
- 30: Zuschlagskomponenten
- 31: grober Sinter
- 32: feiner Sinter
- 33: eisenoxidhältiges Material
- 34: Unterkorn
- 35: Bypassgasstrom
- 36: zweite Brechvorrichtung

## Patentansprüche

1. Verfahren zur Herstellung von flüssigem Roheisen oder flüssigem Stahlvorprodukt (21), bei dem ein eisenoxidhältiges Material (33) enthaltender Sinter (5) in eine Reduktionszone (6) eines Schmelzreduktionssystems (11) eingebracht wird und das im Sinter (5) enthaltene eisenoxidhältige Material (33) mittels eines Reduktionsgases (19) in der Reduktionszone (6) des Schmelzreduktionssystems (11) zumindest teilweise reduziert und das zumindest teilweise reduzierte eisenoxidhältige Material (23) anschließend in einer Schmelzzone (26) des Schmelzreduktionssystems (11) unter Zugabe eines sauerstoffhältigen Gases (20) und Kohlenstoffträger (22) unter Bildung des Reduktionsgases (19) zu dem flüssigen Roheisen oder dem flüssigen Stahlvorprodukt (21) aufgeschmolzen wird, **dadurch gekennzeichnet, dass** das Schmelzreduktionssystem (11) ein die Reduktionszone (6) enthaltendes Reduktionsaggregat (27) und ein die Schmelzzone (26) enthaltendes Schmelzaggregat (28) umfasst, oder als ein die Reduktionszone (6) und die Schmelzzone (26) enthaltender Hochofen (12) ausgebildet ist, wobei der Sinter (5) mit einer Temperatur von mehr als 300°C, bevorzugt mehr als 500°C, besonders bevorzugt mehr als 600°C in die Reduktionszone (6) des Schmelzreduktionssystems (11) eingebracht wird.

2. Verfahren nach Anspruch 1, **dadurch gekennzeichnet, dass** das bei der Reduktion verbrauchte Reduktionsgas (19) als Topgas (8) mit einer Temperatur von mehr als 300°C, vorzugsweise von mehr als 500°C, besonders bevorzugt von mehr als 600°C vom Schmelzreduktionssystem (4) abgezogen wird und die Temperatur des Topgases (8) durch Nutzung zumindest einer Teilmenge der im Topgas (8) enthaltenen Wärmeenergie durch Übertragung auf einen einen Wärmeträger auf weniger als 300°C, vorzugsweise auf weniger als 250°C, besonders bevorzugt auf weniger als 200°C abgesenkt wird.

3. Verfahren nach Anspruch 2, **dadurch gekennzeichnet, dass** die im Topgas (8) enthaltene Druckenergie, nach Nutzung der Wärmeenergie des Topgases (8) und nach einer Entstaubung des Topgases (8), zumindest zum Teil, vorzugsweise in einer Entspannungsturbine (16), genutzt wird.

4. Verfahren nach einem der Ansprüche 2 oder 3, **dadurch gekennzeichnet, dass** dem vom Schmelzreduktionssystem (11) abgezogenen Topgas (8) in einer Kühlvorrichtung (17), vor der Nutzung dessen Wärmeenergie, Wasser und/oder Dampf zur Kühlung des abgezogenen Topgases (8) zugesetzt wird.

5. Verfahren nach einem der Ansprüche 2 bis 4, **dadurch gekennzeichnet, dass** zumindest eine Teilmenge des Topgases (8) vor der Nutzung seiner Wärmeenergie einer Grobentstaubung unterzogen wird.

6. Verfahren nach einem der vorhergehenden Ansprüche, **dadurch gekennzeichnet, dass** der Sinter (5) mittels einer Chargiervorrichtung (10) und einer nachgeordneten Verteilervorrichtung (29) in die Reduktionszone (6) des Schmelzreduktionssystems (11) eingebracht wird, wobei das Einbringen des Sinters (5) in Mischung mit Zusatzstoffen (24) oder als Lagenchargierung mit den Zusatzstoffen (24) erfolgt.

7. Verfahren nach Anspruch 6, **dadurch gekennzeichnet, dass** der Sinter (5) mittels einer Fördervorrichtung (9) in die Chargiervorrichtung (10) eingebracht wird.

8. Verfahren nach Anspruch 7, **dadurch gekennzeichnet, dass** die Temperatur des mittels der Fördervorrichtung (9) geförderten Sinters (5) mehr als 300°C, bevorzugt mehr als 500°C, besonders bevorzugt mehr als 600°C, beträgt.

9. Verfahren nach einem der Ansprüche 7 oder 8, **dadurch gekennzeichnet, dass** das eisenoxidhältige Material (33) mittels einer Sintervorrichtung (1) zu einem Sinterkuchen (2) verarbeitet wird und der Sinterkuchen (2) anschließend in zumindest einer Brechvorrichtung (3,36) zu Sinter gebrochen wird, wobei der gebrochene Sinter (5) nach Klassifizierung in einer Klassifizierungsvorrichtung (4) auf die Fördervorrichtung (9) aufgegeben wird.

10. Verfahren nach einem der Ansprüche 7 bis 9, **dadurch gekennzeichnet, dass** der Sinter (5) mit einer Temperatur von mehr als 300°C, bevorzugt mehr als 500°C, besonders bevorzugt mehr als 600°C auf die Fördervorrichtung (9) aufgegeben wird.

11. Vorrichtung zur Durchführung des Verfahrens nach einem der Ansprüche 1 bis 10, umfassend ein eine Reduktionszone (6) und eine Schmelzzone (26) enthaltendes Schmelzreduktionssystem (11) mit einer Topgasleitung (7) zum Abziehen von Topgas (8) aus dem Schmelzreduktionssystem (11), eine Fördervorrichtung (9) zur Förderung von Sinter (5) in eine dem Schmelzreduktionssystem (11) zugeordnete Chargiervorrichtung (10) und eine Verteilervorrichtung (29), **dadurch gekennzeichnet, dass** das Schmelzreduktionssystem (11) ein die Reduktionszone (6) enthaltendes Reduktionsaggregat (27) und ein die Schmelzzone (26) enthaltendes Schmelzaggregat (28) umfasst, oder als Hochofen (12) ausgebildet ist, und die Fördervorrichtung (9) eine Heißfördervorrichtung, die Chargiervorrichtung (10) eine Heißchargiervorrichtung und die Verteilervorrichtung (29) eine Heißverteilervorrichtung ist.

12. Vorrichtung nach Anspruch 11, **dadurch gekennzeichnet, dass** in der Topgasleitung (7) eine Wärmetauschvorrichtung (13) zum Entziehen von Wärmeenergie aus dem Topgas (8) angeordnet ist.

13. Vorrichtung nach Anspruch 12, **dadurch gekennzeichnet, dass** in der Topgasleitung (7) und nach der Wärmetauschvorrichtung (13) nacheinander eine Entstaubungsvorrichtung (14) zur Entstaubung des Topgases (8) und eine Entspannungsturbine (16) angeordnet sind.

14. Vorrichtung nach einem der Ansprüche 12 oder 13, **dadurch gekennzeichnet, dass** in der Topgasleitung (7), zwischen dem Schmelzreduktionssystem (11) und der Wärmetauschvorrichtung (13) eine Kühlvorrichtung (17) zur Kühlung des Topgases (8) vorhanden ist.

15. Vorrichtung nach Anspruch 14, **dadurch gekennzeichnet, dass** eine die Wärmetauschvorrichtung (13) umgehende Bypassleitung (18), welche vor der Wärmetauschvorrichtung (13) aus der Topgasleitung (7) entspringt und nach der Wärmetauschvorrichtung (13) wieder in die Topgasleitung (7) mündet, vorhanden ist.

16. Vorrichtung nach einem der Ansprüche 11 bis 15, **dadurch gekennzeichnet, dass** der Fördervorrichtung (9) eine Sintervorrichtung (1) mit zumindest einer zugeordneten Brechvorrichtung (3,36) und eine Klassifizierungsvorrichtung (4) vorgeschaltet sind, wobei die Klassifizierungsvorrichtung (4) mit der Fördervorrichtung (9) derart verbunden ist, dass der in der Klassifizierungsvorrichtung (4) klassifizierte Sinter (5) auf die Fördervorrichtung (9) aufgebbar ist.

17. Vorrichtung nach einem der Ansprüche 14 bis 16, **dadurch gekennzeichnet, dass** in der Topgasleitung (7), zwischen der Wärmetauschvorrichtung (13) und der Kühlvorrichtung (17), eine Grobentstaubungsvorrichtung (25) zur Grobentstaubung des aus dem Schmelzreduktionssystem (11) abgezogenen Topgases (8) angeordnet ist.
